# EUROPÄISCHE PATENTANMELDUNG

(11) **EP 3 591 326 A1**
(43) Veröffentlichungstag der Anmeldung: **08.01.2020**
(21) Anmeldenummer: 18181861.8
(22) Anmeldetag: 05.07.2018
(51) Int. Cl.: F28D 7/00, F28D 7/16, B01F 5/00, B01F 15/06, B01D 5/00, F25B 39/04, F28F 13/00, F28F 13/18, F28B 9/08, B01D 53/00, B01D 53/26, F28F 9/02, F28D 21/00

(54) **WÄRMETAUSCHER ZUM TEMPERIEREN EINES FLUIDS, VERFAHREN ZUM HERSTELLEN EINES SOLCHEN WÄRMETAUSCHERS SOWIE VERFAHREN ZUM TEMPERIEREN EINES FLUIDS**

(71) Anmelder: Siemens Aktiengesellschaft, 80333 München (DE)
(72) Erfinder: Kiener, Christoph, 81369 München (DE); Küsters, Yves, 10829 Berlin (DE)

(57) **Zusammenfassung**

Die Erfindung betrifft einen Wärmetauscher (10). Um durch den Wärmetauscher (10) wenigstens ein Fluid besonders effektiv temperieren zu können, weist der Wärmetauscher (10) wenigstens eine Hohlgitterstruktur (12) auf, welche mehrere hohle Stäbe (14) umfasst, die an jeweiligen hohlen Knoten (16) der Hohlgitterstruktur (12) mechanisch und fluidisch miteinander verbunden sind. Die Hohlgitterstruktur (12) ist außenseitig von einem ersten Fluid umströmbar und innenseitig von einem zweiten Fluid (18) durchströmbar. Über die Hohlgitterstruktur (12) kann ein besonders effektiver Wärmeaustausch zwischen den Fluiden erfolgen, wodurch wenigstens eines der Fluide besonders effektiv temperiert werden kann.

## Beschreibung

Die Erfindung betrifft einen Wärmetauscher zum Temperieren wenigstens eines Fluids, ein Verfahren zum Herstellen eines solchen Wärmetauschers sowie ein Verfahren zum Temperieren wenigstens eines Fluids.

Die Temperierung, insbesondere die Kühlung, eines Fluids, insbesondere dessen Fluidstroms, ist eine häufige Fragestellung in der Verfahrenstechnik. Ist die Temperierung beispielsweise eine Kühlung, so kann durch die Kühlung des Fluids eine Kondensation zumindest einer Komponente des Fluids bewirkt werden. Mit anderen Worten kann aus dem genannten Fluidstrom wenigstens oder genau eine Komponente kondensiert werden, indem der Fluidstrom gekühlt wird. Im Rahmen der Kondensation erfolgt ein Phasenübergang der Komponente von gasförmig zu flüssig. Zum Temperieren eines Fluids wird üblicherweise wenigstens ein auch als Wärmeübertrager bezeichneter Wärmetauscher verwendet, welcher dann, wenn das Fluid beziehungsweise wenn die wenigstens eine Komponente des Fluids kondensiert wird, als Kondensator fungiert beziehungsweise arbeitet.

Üblicherweise erfolgt ein Druckverlust des temperierenden, insbesondere zu kühlenden, und gegebenenfalls zu kondensierenden Fluidstroms bei dessen Passage durch den Wärmetauscher, wobei der Druckverlust gegen die Größe des Wärmetauschers sowie die Vollständigkeit der Entfernung der kondensierbaren Komponente konkurriert. So sind beispielsweise kleine, von dem Fluid durchströmbare Kanäle und eine große Anzahl an Berührflächen gut für einen hohen Wärmeaustausch, jedoch bedingen solche kleinen Kanäle und die hohe Anzahl an Berührflächen einen hohen Druckverlust. Eine große Größe des Wärmetauschers kann zu hohen Baukosten und zu einem hohen Platzbedarf des Wärmetauschers führen, ermöglicht jedoch die Realisierung von großen Kanälen, sodass der Druckverlust des Fluids geringgehalten werden kann.

Eine besonders umfangreiche, insbesondere vollständige, Kondensation beziehungsweise Entfernung der kondensierbaren Komponente aus dem Fluid bedeutet üblicherweise einen hohen Druckverlust und/oder erfordert eine große Baugröße des Wärmetauschers, um große, das Fluid berührende Flächen und/oder eine sehr hohe Temperaturdifferenz zu realisieren. Um das Fluid, welches beispielsweise ein erstes Fluid ist, zu temperieren, kommt üblicherweise ein zweites Fluid zum Einsatz. Über den Wärmetauscher kann ein Wärmeaustausch zwischen den Fluiden erfolgen. Wird beispielsweise das erste Fluid über den Wärmetauscher durch das zweite Fluid gekühlt, insbesondere kondensiert, so fungiert das zweite Fluid als Kühlmedium. Das Kühlmedium wird auch als Kühlfluid bezeichnet. Um eine umfangreiche Kondensation der Komponente zu realisieren, kann der Einsatz eines kostenintensiven Kühlfluids erforderlich sein, da eine Rückkühlung des Kühlmediums von einem niedrigen Temperaturniveau auf ein noch geringeres Temperaturniveau erforderlich sein kann.

Ein weiteres Problem besteht üblicherweise darin, dass die kondensierte und dadurch flüssige sowie von dem Wärmetauscher abfließende Komponente auf einer Oberfläche des Wärmetauschers den Wärmeübergang zu gekühlten Bauteilen des Wärmetauschers verringert. Eine kleinteilige Strukturierung ist mit herkömmlichen Herstellungsmethoden nur bis zu einem gewissen Grad möglich, insbesondere hinsichtlich eines Transports des zweiten Fluids beziehungsweise hinsichtlich eines Abtransports von Kondensationswärme. Außerdem ist eine beispielsweise durch Aluminium und/oder Kupfer realisierbare hohe Wärmeleitfähigkeit des Wärmetauschers häufig nicht verträglich mit chemischen Ansprüchen an den Wärmetauscher. Andererseits sind Legierungen mit hoher chemischer Beständigkeit wie Edelstähle, Nickelbasis-Legierungen, Titan, Zirkonium, Hafnium, Niob, Tantal häufig nicht einfach durch konventionelle Umform-, Zerspanung- und Fügetechniken bearbeitbar. Außerdem haben diese Legierungen oft eine schlechte Wärmeleitfähigkeit und sind damit bei größeren Wandstärken beziehungsweise Wanddicken hemmend für den Wärmeaustausch, das heißt der Wärmetauscher muss größer gebaut werden aufgrund der schlechten wärmeleitenden Legierungen. Dies führt zum Einsatz von kostenintensiven Legierungen und zu einem hohen Bauraumbedarf des Wärmetauschers.

Aufgabe der vorliegenden Erfindung ist es daher, einen Wärmetauscher, ein Verfahren zum Herstellen eines solchen Wärmetauschers und ein Verfahren zum Temperieren eines Fluids zu schaffen, sodass wenigstens ein Fluid besonders effektiv temperiert, insbesondere gekühlt, werden kann.

Diese Aufgabe wird erfindungsgemäß durch einen Wärmetauscher und durch ein Verfahren mit den Merkmalen der unabhängigen s Patentansprüche gelöst. Vorteilhafte Ausgestaltungen mit zweckmäßigen Weiterbildungen der Erfindung sind in den übrigen Ansprüchen angegeben.

Ein erster Aspekt der Erfindung betrifft einen Wärmetauscher. Wie im Folgenden noch genauer beschrieben wird, ist durch den Wärmetauscher wenigstens ein Fluid temperierbar, das heißt zu kühlen und/oder zu erwärmen.

Im Rahmen der vorliegenden Erfindung ist unter "Temperieren" wenigstens eines Fluids zu verstehen, dass das wenigstens eine Fluid beispielsweise einfach erwärmt beziehungsweise geheizt oder gekühlt wird. Ein Steuern oder Regeln einer Temperatur des wenigstens eines Fluids ist nicht notwendigerweise unter dem Begriff "Temperieren" verstehen. Mit anderen Worten ist vorliegend unter "Temperieren" zu verstehen, dass eine Temperatur des wenigstens einen Fluids verändert wird, insbesondere ohne dass die Temperatur des wenigstens einen Fluids gezielt geregelt oder gesteuert wird. Der Begriff "Temperieren" ist also insbesondere als ein Oberbegriff zu verstehen, unter welchem "Kühlen und/oder Erwärmen" verstanden wird beziehungsweise welcher durch "Kühlen und/oder Erwärmen" ersetzt werden kann.

Der Wärmetauscher weist wenigstens eine Hohlgitterstruktur auf, welche eine hohle Gitterstruktur ist. Die Hohlgitterstruktur weist mehrere hohle Stäbe auf, welche auch als Hohlstäbe bezeichnet werden. Die Hohlstäbe sind an jeweiligen hohlen Knoten der Hohlgitterstruktur mechanisch und fluidisch miteinander verbunden.

Die Hohlgitterstruktur und somit die Hohlstäbe und die Knoten sind außenseitig von einem ersten Fluid umströmbar. Außerdem sind die Hohlstäbe und die auch als Knotenpunkte bezeichneten Knoten, insbesondere deren jeweiliges Inneres, dadurch, dass die Hohlstäbe an den hohlen Knoten mechanisch und fluidisch miteinander verbunden sind, von einem zweiten Fluid durchströmbar. Dabei ist wenigstens eines der Fluide infolge eines Wärmeaustausches mit dem jeweils anderen Fluid über die Hohlgitterstruktur temperierbar. Beispielsweise ist die Hohlgitterstruktur, insbesondere ihr Inneres, von dem zweiten Fluid durchströmbar, wobei beispielsweise durch das zweite Fluid das erste Fluid über die Hohlgitterstruktur temperierbar ist. Ferner ist es denkbar, dass beispielsweise durch das erste Fluid das zweite Fluid über die Hohlgitterstruktur temperierbar ist.

Die Hohlstäbe weisen vorzugsweise einen geradlinigen Verlauf auf. Mehrere erste der Hohlstäbe erstrecken sich beispielsweise von einem ersten der Knoten, insbesondere sternförmig und/oder geradlinig, weg, sodass die ersten Hohlstäbe über den den ersten Hohlstäben gemeinsamen ersten Knoten mit dem zweiten Fluid versorgbar sind. Dies bedeutet, dass das zweite Fluid beispielsweise zunächst durch den ersten Knoten hindurchströmen und dann von dem ersten Knoten in die ersten Hohlstäbe einströmen und dann die ersten Hohlstäbe durchströmen kann. Die ersten Hohlstäbe sind beispielsweise fluidisch und mechanisch einerseits beziehungsweise einenends mit dem ersten Knoten verbunden. Jeweils andererseits beziehungsweise andernends ist der jeweilige erste Hohlstab mit einem jeweiligen anderen der Knoten der Hohlgitterstruktur mechanisch und fluidisch verbunden, sodass das den jeweiligen ersten Hohlstab durchströmende zweite Fluid aus dem jeweiligen ersten Hohlstab ausströmen und in den jeweiligen anderen Knoten einströmen und dann den jeweiligen anderen Knoten durchströmen kann.

Mehrere zweite der Hohlstäbe sind beispielsweise mechanisch und fluidisch mit einem jeweiligen der anderen Knoten verbunden, sodass das den jeweiligen anderen Knoten durchströmende zweite Fluid von dem jeweiligen anderen Knoten in die jeweiligen zweiten Hohlstäbe einströmen und dann die jeweiligen zweiten Hohlstäbe durchströmen kann. Auf diese Weise kann das zweite Fluid von Stab zu Stab und von Knoten zu Knoten fließen beziehungsweise strömen und somit insgesamt durch die Hohlgitterstruktur hindurchfließen beziehungsweise hindurchströmen. Da das andere Fluid, insbesondere zweite Fluid, zum Temperieren wenigstens einen Fluids, insbesondere des ersten Fluids, genutzt wird, wird das anderen Fluid, insbesondere das zweite Fluid, auch als Temperierfluid oder Temperiermedium, insbesondere als Kühlfluid oder Kühlmedium, bezeichnet.

Über die Hohlgitterstruktur kann ein Wärmeaustausch zwischen dem die Hohlgitterstruktur umströmenden ersten Fluid und dem die Hohlgitterstruktur durchströmenden zweiten Fluid realisiert werden, wodurch das wenigstens eine Fluid, insbesondere das erste Fluid, temperierbar ist beziehungsweise temperiert wird. Die Hohlgitterstruktur trennt dabei die Fluide beziehungsweise hält die Fluide fluidisch getrennt, sodass eine Vermischung der Fluide, insbesondere zumindest im Bereich der Hohlgitterstruktur, unterbleibt. Somit ist die Hohlgitterstruktur vorzugsweise für die Fluide dicht.

Es wurde gefunden, dass die Hohlgitterstruktur eine effektive, effiziente und bauraumgünstige Temperierung, insbesondere Kühlung sowie gegebenenfalls Kondensation, des wenigstens einen Fluids ermöglicht, wobei ein übermäßiger Druckverlust des wenigstens einen Fluids, insbesondere des ersten Fluids, auf seinem Weg von einer Eingangsseite zu einer Ausgangsseite der Hohlgitterstruktur vermieden werden kann, und wobei das erste Fluid die Hohlgitterstruktur außenseitig beziehungsweise außenumfangsseitig umströmt. Gleichzeitig kann der Bauraumbedarf des Wärmetauschers besonders gering gehalten werden, da die Hohlgitterstruktur die bauraumgünstige Realisierung einer besonders großen Anzahl an Wärmeübertragungsflächen und somit die Realisierung einer besonders großen Gesamtwärmeübertragungsfläche, über welche Wärme zwischen den Fluiden ausgetauscht werden kann, ermöglicht.

Dabei hat es sich als besonders vorteilhaft gezeigt, wenn die Hohlgitterstruktur einstückig ausgebildet ist. Die Hohlgitterstruktur ist somit vorzugsweise ein Monolith, dessen Bauraumbedarf und Kosten in einem besonders geringen Rahmen gehalten werden können. Außerdem können Dichtungsprobleme vermieden werden, da keine Verbindungsstellen vorgesehen sind, an denen separat voneinander ausgebildete Bauteile miteinander verbunden sind. Somit müssen keine Verbindungsstellen aufwendig abgedichtet werden.

Unter dem Merkmal, dass die Hohlgitterstruktur einstückig ausgebildet ist, ist zu verstehen, dass die Hohlgitterstruktur durch ein einziges, integrales Bauteil ausgebildet und somit an beziehungsweise aus einem Stück gebildet ist. Dies bedeutet, dass die Hohlgitterstruktur nicht mehrere, separat voneinander ausgebildete und miteinander verbundene Bauteile aufweist, sondern die oder alle Hohlstäbe und die oder alle Knoten der Hohlgitterstruktur sind integral beziehungsweise einstückig miteinander ausgebildet. Dies bedeutet, dass die Knoten und Hohlstäbe durch ein einziges Bauteil gebildet sind.

Um dabei das wenigstens eine Fluid, insbesondere das erste Fluid, besonders vorteilhaft, insbesondere besonders kostengünstig und besonders bauraumgünstig, temperieren zu können, ist es in weiterer Ausgestaltung der Erfindung vorgesehen, dass die Hohlgitterstruktur durch ein generatives Fertigungsverfahren, insbesondere durch 3D-Drucken, hergestellt ist. Vorzugsweise ist die Hohlgitterstruktur durch selektives Laserschmelzen (SLM) gebildet. Der Erfindung liegt ferner die Erkenntnis zugrunde, dass üblicherweise bestimmte Baugrößen nicht unterschritten werden können, da sonst die bauliche Komplexität für einen zu erzielenden Durchsatz an zu temperierendem Fluid sowie für einen Durchsatz des zweiten Fluids zu hoch würde. Außerdem konnten bislang Wandstärken, insbesondere bei der Verwendung von speziellen Legierungen, nicht unterschritten werden. Des Weiteren entstand üblicherweise ein hoher manueller Aufwand in der Fertigung, insbesondere bei der Verwendung von Sonderlegierungen. Die zuvor genannten Probleme und Nachteile können durch den erfindungsgemäßen Wärmetauscher vermieden werden, sodass das erste Fluid effizient, effektiv sowie bauraum- und kostengünstig temperiert, insbesondere gekühlt dabei vorzugsweise kondensiert, werden kann.

Insbesondere generative Fertigungsverfahren wie beispielsweise das selektive Laserschmelzen beziehungsweise eine Metallpulverbettfusion ermöglichen den Bau der Hohlgitterstruktur mit geringen Innendurchmessern und/oder Wanddicken, welche auch als Wandstärken bezeichnet werden. Somit ist es vorzugsweise vorgesehen, dass die Hohlgitterstruktur aus Metallpulver hergestellt ist beziehungsweise wird, welches beispielsweise zunächst in einem auch als Metallpulverbett bezeichneten Pulverbett aufgenommen ist. Das Metallpulver ist granularer Materie und umfasst somit Metallpartikel, welche durch wenigstens einen Energiestrahl, insbesondere durch wenigstens einen Laserstrahl, an- beziehungsweise aufgeschmolzen und dadurch miteinander verbunden werden. Hierdurch wird die Hohlgitterstruktur beispielsweise Schicht für Schicht aus dem in dem Pulverbett aufgenommenen Metallpulver hergestellt.

Bei einer besonders vorteilhaften Ausführungsform der Erfindung weisen die hohlen Stäbe einen Innendurchmesser auf, weleher in einem Bereich von einschließlich 0,1 mm bis einschließlich 10 mm, insbesondere in einem Bereich von einschließlich 0,8 mm bis einschließlich 3 mm, liegt. Hierdurch kann einerseits der Druckverlust des zweiten Fluids bei dessen Weg durch die Hohlgitterstruktur besonders gering gehalten werden. Andererseits kann der Bauraumbedarf des Wärmetauschers in einem besonders geringen Rahmen gehalten werden.

Eine weitere Ausführungsform zeichnet sich dadurch aus, dass die Hohlgitterstruktur eine Wanddicke aufweist, welche in einem Bereich von einschließlich 0,1 mm bis einschließlich 1 mm, insbesondere in einem Bereich von einschließlich 0,2 mm bis einschließlich 0,9 mm und vorzugsweise in einem Bereich von einschließlich 0,3 mm bis einschließlich 0,7 mm, liegt. Hierdurch kann das wenigstens eine Fluid, insbesondere das erste Fluid, besonders bauraumgünstig temperiert, insbesondere gekühlt, werden.

Eine weitere Ausführungsform zeichnet sich dadurch aus, dass die Hohlgitterstruktur wenigstens zwei voneinander unterschiedliche, durch die Stäbe und die Knoten gebildete Gittertypen aufweist. Dadurch kann eine besonders vorteilhafte und beispielsweise mehrstufige beziehungsweise fraktionierte Temperierung, insbesondere Kühlung und vorzugsweise Kondensation, des wenigstens einen Fluids, insbesondere des ersten Fluids, auf bauraum- und kostengünstige Weise bewirkt werden. In Kombination mit einem generativen Fertigungsverfahren wie beispielsweise selektivem Laserschmelzen kann die Hohlgitterstruktur als Gitterstruktur mit unterschiedlichen Gittertypen auf einfache Weise realisiert werden, die Aufbauregeln für das generative Fertigungsverfahren entsprechen.

Um einen besonders vorteilhaften Wärmeaustausch zwischen den Fluiden auf bauraumgünstige Weise realisieren zu können, ist es in weiterer Ausgestaltung der Erfindung vorgesehen, dass die Hohlgitterstruktur zumindest in einem Teilbereich außenseitig mit einer porösen, von dem ersten Fluid durchströmbaren Schicht versehen, insbesondere beschichtet, ist. Beispielsweise ist die auch als Gitterstruktur bezeichnete Hohlgitterstruktur zumindest in einem Teilbereich außenumfangsseitig mit der porösen Schicht überzogen. Die Schicht ähnelt beispielsweise einem gesinterten, insbesondere einem grobgesinterten, Metall. Beispielsweise kann die Schicht aus einem metallischen und/oder gesinterten Werkstoff ausgebildet sein. Ferner ist es denkbar, dass die Hohlgitterstruktur und die Schicht aus voneinander unterschiedlichen, insbesondere metallischen, Werkstoffen gebildet sind. Die poröse Schicht bildet beispielsweise Kanäle, die, insbesondere bei der Herstellung der Schicht, durch digitale Kommandos in ihren Verzweigungen und ihrer Größe gezielt und somit bedarfsgerecht eingestellt werden können.

Bei einer besonders vorteilhaften Ausführungsform der Erfindung ist ein den Stäben gemeinsamer und von dem zweiten Fluid durchströmbarer Zulaufkanal vorgesehen, über welchen die Stäbe mit dem zweiten Fluid versorgbar sind. Dies bedeutet, dass das zweite Fluid zunächst den Zulaufkanal durchströmen und dann von dem Zulaufkanal in die Stäbe einströmen und daraufhin die Stäbe und die Knoten durchströmen kann. Hierdurch können die Stäbe und die Knoten auf einfache und bauraumgünstige Weise mit dem zweiten Fluid versorgt werden. Wieder mit anderen Worten ausgedrückt ist das zweite Fluid über den Zulaufkanal in die auch als Streben bezeichneten Stäbe einleitbar. Darunter, dass die Hohlstäbe mit dem zweiten Fluid versorgbar sind, ist zu verstehen, dass das zweite Fluid über den Zulaufkanal in die Stäbe eingeleitet werden kann, sodass das zweite Fluid durch die Stäbe, das heißt durch deren jeweiliges Inneres, hindurchströmen kann beziehungsweise hindurchströmt. Außerdem sind dadurch die Knoten, die, insbesondere in ihrem Inneren, von dem zweiten Fluid durchströmbar sind, mit dem zweiten Fluid versorgbar, sodass die Hohlgitterstruktur innenseitig mit dem zweiten Fluid über den Zulaufkanal versorgbar ist. Dies bedeutet, dass das zweite Fluid durch die Hohlgitterstruktur, insbesondere durch deren Inneres, und somit durch die Stäbe und durch die Knoten hindurchströmen kann. Das erste Fluid kann die Hohlgitterstruktur und somit die Stäbe und die Knoten außenseitig beziehungsweise außenumfangsseitig umströmen.

Um das zweite Fluid besonders vorteilhaft und insbesondere großflächig in die Hohlgitterstruktur einleiten und in der Folge eine besonders vorteilhafte Temperierung, insbesondere Kühlung, des wenigstens einen Fluids, insbesondere des ersten Fluids, realisieren zu können, ist es in weiterer Ausgestaltung der Erfindung vorgesehen, dass der Zulaufkanal stromauf der Stäbe und vorzugsweise stromauf der Knoten, insbesondere stromauf der Hohlgitterstruktur, in mehrere, von dem zweiten Fluid durchströmbare Zulaufteilkanäle aufzweigt, über welche die Stäbe beziehungsweise die Hohlgitterstruktur mit dem zweiten Fluid versorgbar sind beziehungsweise ist. Die Zulaufteilkanäle bilden somit eine verzweigte Struktur, welche stromab des Zulaufkanals und stromauf der Hohlgitterstruktur angeordnet ist. Die Zulaufteilkanäle wirken somit als Verteilstrukturen, über die das zunächst den Zulaufkanal durchströmende zweite Fluid der Hohlgitterstruktur zugeführt und in die Hohlgitterstruktur eingeleitet wird. Insbesondere kann dadurch das zweite Fluid an mehreren, voneinander unterschiedlichen beziehungsweise beabstandeten Stellen gleichzeitig in die Hohlgitterstruktur einströmen. Die Verteilstrukturen können wie ein baumartiger beziehungsweise astartiger Verteiler ausgeführt und/oder durch Topologieoptimierung gestaltet sein, zum Beispiel gemäß Fractherm, nur ohne Rückführung des zweiten Fluids, sondern mit gleichmäßig verteilter Einspeisung vorzugsweise über die gesamte Fläche.

Eine weitere Ausführungsform zeichnet sich dadurch aus, dass die Hohlgitterstruktur zwischen zwei auf einander gegenüberliegenden ersten Seiten der Hohlgitterstruktur angeordneten und von dem zweiten Fluid durchströmbaren ersten Wänden angeordnet ist, wobei die Stäbe und die Knoten über eine der ersten Wände mit dem zweiten Fluid versorgbar sind, und wobei das zweite Fluid über die andere der ersten Wände aus den Stäben und den Knoten abführbar ist. Hierdurch kann eine bauraumgünstige Versorgung der Hohlgitterstruktur mit dem zweiten Fluid gewährleistet werden.

Alternativ oder zusätzlich hat es sich als vorteilhaft gezeigt, wenn die Hohlgitterstruktur zwischen zwei auf einander gegenüberliegenden und von den ersten Seiten unterschiedlichen zweiten Seiten der Hohlgitterstruktur angeordneten und von dem ersten Fluid durchströmbaren zweiten Wänden angeordnet ist, wobei die Hohlgitterstruktur außenseitig über eine der zweiten Wände mit dem ersten Fluid versorgbar ist, und wobei das erste Fluid über die andere der zweiten Wände von der Hohlgitterstruktur abführbar ist. Dies bedeutet beispielsweise, dass das erste Fluid zunächst die eine der zweiten Wände durchströmen kann und danach aus der einen der zweiten Wände ausströmt und die Hohlgitterstruktur außenseitig umströmt. Daraufhin strömt das erste Fluid von der Hohlgitterstruktur kommend in die andere der zweiten Wände ein und strömt daraufhin durch die andere der zweiten Wände, wodurch über die andere der zweiten Wände das erste Fluid von der Hohlgitterstruktur abgeführt wird. Durch die Wände können bauraumgünstig gezielte Ströme der Fluide gewährleistet werden.

Eine weitere Ausführungsform zeichnet sich dadurch aus, dass der Wärmetauscher wenigstens eine Kondensatsammelzone aufweist, in welcher aus der als Kühlung ausgebildeten Temperierung des wenigstens einen Fluids, insbesondere des ersten Fluids, resultierendes Kondensat aufzufangen und zu sammeln ist.

Um dabei den Bauraumbedarf des Wärmetauschers in einem besonders geringen Rahmen halten zu können, ist es in weiterer Ausgestaltung der Erfindung vorgesehen, dass die Kondensatsammelzone wenigstens eine von dem Kondensat durchströmbare poröse Schicht aufweist. Beispielsweise in Einbaulage des Wärmetauschers in vertikaler Richtung nach unten wird das Kondensat durch die vorzugsweise als feinporöse Schicht ausgebildete poröse Schicht der Kondensatsammelzone abgezogen beziehungsweise abgeführt oder abgesaugt. Das Kondensat sammelt sich beispielsweise in einem Tiefsumpf und kann aus diesem abgezogen, abgeführt oder abgesaugt werden, insbesondere in Einbaulage des Wärmetauschers in vertikaler Richtung nach unten. Dabei nimmt der Wärmetauscher seine Einbaulage in vollständig hergestelltem Zustand und während eines Betriebs des Wärmetauschers ein, wobei während des Betriebs des Wärmetauschers das wenigstens eine Fluids, insbesondere das erste Fluid, temperiert, insbesondere gekühlt und dabei vorzugsweise kondensiert, wird. Unter der Kondensierung des wenigstens einen Fluids, insbesondere des ersten Fluids, ist zu verstehen, dass wenigstens eine Komponente des ersten Fluids kondensiert und somit vom flüssigen in den gasförmigen Zustand überführt wird.

Der Wärmetauscher weist, insbesondere während seines Betriebs, wenigstens eine erste Zone auf, in welcher das zweite Fluid, insbesondere während des Betriebs des Wärmetauschers, mit einer ersten Temperatur durch die Hohlgitterstruktur hindurchströmt. Des Weiteren ist es vorzugsweise vorgesehen, dass der Wärmetauscher, insbesondere während seines Betriebs, eine zweite Zone aufweist, welche sich beispielsweise an die erste Zone anschließt beziehungsweise neben der ersten Zone angeordnet ist. In der zweiten Zone strömt das zweite Fluid, insbesondere während des Betriebs des Wärmetauschers, mit einer gegenüber der ersten Temperatur unterschiedlichen zweiten Temperatur durch die Hohlgitterstruktur, wobei vorzugsweise die zweite Temperatur geringer als die erste Temperatur ist. Vorzugsweise sind die Zonen fluidisch voneinander getrennt. Alternativ oder zusätzlich ist beispielsweise die zweite Zone in Einbaulage des Wärmetauschers in vertikaler Richtung unterhalb der ersten Zone angeordnet. Die zweite Zone ist beispielsweise in Einbaulage des Wärmetauschers in vertikaler Richtung unterhalb der Kondensatsammelzone angeordnet, um beispielsweise den Dampfdruck des Kondensats noch weiter zu verringern. Ferner kann die Kondensatsammelzone in der zweiten Zone angeordnet sein oder die zweite Zone sein. Ferner ist es denkbar, dass die Hohlgitterstruktur, insbesondere während des Betriebs des Wärmetauschers, in der zweiten Zone von einem dritten Fluid durchströmbar ist beziehungsweise durchströmt wird, wobei das dritte Fluid, insbesondere während des Betriebs des Wärmetauschers, die zweite Zone mit der von der ersten Temperatur unterschiedlichen zweiten Temperatur durchströmt.

In Einbaulage des Wärmetauschers in vertikaler Richtung unterhalb der zweiten Zone kann eine dritte Zone der Hohlgitterstruktur vorgesehen sein, die in der dritten Zone von dem zweiten Fluid mit einer dritten Temperatur oder von einem vierten Fluid mit der dritten Temperatur durchströmbar sein kann. Die dritte Temperatur ist dabei von der ersten Temperatur und von der zweiten Temperatur unterschiedlich. Insbesondere ist die dritte Temperatur nochmals geringer als die zweite Temperatur. Die dritte Zone verhindert ein erneutes Abdampfen des Kondensats, wobei das Kondensat durch die dritte Zone beziehungsweise in der dritten Zone für eine Ausschleusung weiter gekühlt werden kann.

Eine weitere Ausführungsform zeichnet sich dadurch aus, dass der Wärmetauscher eine Massivgitterstruktur mit massiven und somit auch als Massivstäbe bezeichneten Stäbe aufweist, welche beispielsweise mechanisch mit den hohlen Knoten und/oder mechanisch mit massiven Knoten der Massivgitterstruktur verbunden sein können. Dadurch können die Massivstäbe über die hohlen Knoten und/oder über die massiven Knoten mechanisch miteinander verbunden und/oder mechanisch mit den Hohlstäben verbunden sein. Die Massivstäbe und/oder die Massivknoten können in der Hohlgitterstruktur angeordnet sein. Dies bedeutet, dass die Massivstäbe in die Hohlgitterstruktur eingebunden beziehungsweise eingeknüpft sind. Die Massivstäbe und/oder die Massivknoten sind beispielsweise aus einem metallischen Werkstoff gebildet. Insbesondere können die Hohlstäbe und die Massivstäbe aus demselben beziehungsweise aus dem gleichen Werkstoff gebildet sein. Insbesondere kann die Massivgitterstruktur einstückig mit der Hohlgitterstruktur ausgebildet sein, sodass diese den zuvor genannten Monolithen bilden. Dabei sind beispielsweise die Massivstäbe einstückig mit den Hohlstäben und einstückig mit den hohlen Knoten ausgebildet. Alternativ oder zusätzlich sind die Massivstäbe einstückig mit den Massivknoten ausgebildet. Insbesondere kann die Massivgitterstruktur beziehungsweise können die Massivstäbe durch das generative Fertigungsverfahren hergestellt sein, durch welches die hohlen Stäbe und die hohlen Knoten hergestellt sind. Die Massivstäbe weisen eine besonders hohe Wärmeleitfähigkeit auf. Insbesondere weisen die Massivstäbe eine größere Wärmeleitfähigkeit als die Hohlstäbe auf, wodurch beispielsweise im Vergleich zu einer Hohlstruktur eine kältere Zone, insbesondere in einem unteren Bereich der Hohlgitterstruktur beziehungsweise des Wärmetauschers, geschaffen werden kann. Mit anderen Worten bilden beispielsweise die Massivstäbe, insbesondere zusammen mit den massiven Knoten, die Massivgitterstruktur, welche einstückig mit der Hohlgitterstruktur ausgebildet sein kann. Die vorigen und folgenden Ausführungen zur Hohlgitterstruktur können ohne weiteres auf die Massivgitterstruktur übertragen werden, sodass beispielsweise die Massivgitterstruktur außenseitig beziehungsweise außenumfangsseitig mit einer beispielsweise von dem ersten Fluid durchströmbaren porösen Schicht beziehungsweise porösen Struktur versehen, insbesondere überzogen, sein kann. Beispielsweise strömt das erste Fluid, insbesondere während des Betriebs des Wärmetauschers, außenseitig um die Massivgitterstruktur.

Der Wärmetauscher kann einen Behälter aufweisen, welcher zumindest die Hohlgitterstruktur sowie gegebenenfalls die beschriebenen Wände umfasst. Der Behälter kann mit wenigstens einer oder mehreren Dichtungsnuten für einen hochdruckfesten Deckel sowie mit Schraubenführungen für ein Anflanschen eines beziehungsweise des Deckels ausgestattet sein. In der jeweiligen Dichtungsnut kann beispielsweise wenigstens eine Dichtung zumindest teilweise aufgenommen werden, wobei die Dichtung aus einem elastischen Material, insbesondere aus Gummi, gebildet sein kann. Durch Verwendung der vorzugsweise elastischen Dichtung kann der Deckel druckfest gegen den Behälter gepresst beziehungsweise abgedichtet werden, sodass der Deckel durch die jeweilige Dichtung besonders vorteilhaft gegen den Behälter abgedichtet werden kann. Die Dichtungsnuten und/oder die Schraubenführungen können ebenfalls durch das generative Fertigungsverfahren hergestellt sein.

Ferner können wenigstens oder genau zwei Dichtungsringe mit einer Zwischenentleerung eingesetzt werden. Die Zwischenentleerung zwischen den Dichtungsringen wird beispielsweise über wenigstens oder genau ein Überdruckventil gegeben, welches auch als Überstromventil bezeichnet beziehungsweise als Überstromventil ausgebildet sein kann. Die Zwischenentleerung wird beispielsweise über eine Fackel oder eine Muffel zur Nachverbrennung entsorgt. Das Dichtungsprinzip entspricht beispielsweise einem Dichtungsprinzip, wie es bei Hochdruckverschlüssen von giftigen oder brennbaren Gasen zum Einsatz kommt.

Die Verwendung der Hohlgitterstruktur sowie gegebenenfalls der etwaig vorgesehenen Massivgitterstruktur ermöglicht die Realisierung von großen Oberflächen auf bauraumgünstige Weise. Die Hohlgitterstruktur beziehungsweise die Massivgitterstruktur können gegenüber dem zu temperierenden äußeren ersten Fluid in einer Weise orientiert sein, dass das erste Fluid auf seinem Weg durch die Hohlgitterstruktur ständig an den Knoten außenumfangsseitig anstößt. Die Knoten fungieren dabei an Verzweigungen, da sich beispielsweise die Hohlstäbe von dem jeweiligen hohlen Knoten geradlinig sowie vorzugsweise sternförmig wegerstrecken. Das erste Fluid stößt somit ständig an Verzweigungen an und wird an Zusammenführungen dann erneut durchgewirbelt, was zu einem sehr guten Wärmeübergang beziehungsweise Wärmeaustausch mit dem zweiten Fluid führt, ohne einen übermäßigen Druckverlust zu erzeugen. Außerdem können besonders dünne Wände der Hohlgitterstruktur realisiert werden, insbesondere bei kleinen Durchmessern, was zu einer hohen Druckfestigkeit und gleichzeitig zu einem hohen Wärmeübergang führt, wobei dies auch bei chemisch sehr resistenten Legierungen wie beispielsweise Nickelbasis-Legierungen, Niob, Tantal und anderen Legierungen realisiert werden kann.

Die poröse Schicht, mit welcher die Hohlgitterstruktur außenseitig versehen ist, bildet ein poröses Feingitter, welches beispielsweise die Kondensatbildung aus dem ersten Fluid durch Kapillarkondensation und einem Kondensattransport durch Kapillareffekte in einen Sammelbereich beispielsweise in Form der Kondensatsammelzone unterstützt oder bewirkt. Da durch die Hohlgitterstruktur sowie die gegebenenfalls vorgesehene Massivgitterstruktur besonders große Wärmeübergangsflächen realisiert werden können, kann eine vorteilhafte Temperierung des wenigstens einen Fluids, insbesondere des ersten Fluids, auch dann realisiert werden, wenn die Hohlgitterstruktur beziehungsweise die Massivgitterstruktur aus einem schlecht wärmeleitenden Werkstoff, insbesondere Metall, gebildet ist. Außerdem kann der Bauraumbedarf besonders gering gehalten werden. Das poröse Feingitter für die Kapillarleitung kann in Schichtdicke und Porosität genau an jeweilige Anforderungen angepasst werden. Die vorzugsweise vorgesehene monolithische Bauweise der Hohlgitterstruktur kann für eine sehr druckfeste Gesamtstruktur genutzt werden, da Wandstärken maßgeschneidert werden können, bei gleichzeitig dünnen Wänden an Wärmeübergängen, die aber durch kleine Durchmesser trotzdem druckfest sind. Die monolithische Bauweise, welche durch das generative Fertigungsverfahren darstellbar ist, ermöglicht trotz der hohen Komplexität eine kostengünstige und somit wirtschaftliche Fertigung des Wärmetauschers, wobei übermäßige Nachbearbeitungsschritte vermieden werden können.

Durch Einsatz der porösen Schicht der Kondensatsammelzone kann beispielsweise eine durch die poröse Schicht der Kondensatsammelzone gebildete Kapillarstruktur realisiert werden, durch welche das Kondensat, insbesondere durch Kapillareffekte beziehungsweise Kapillarkräfte abgeführt werden kann. Durch das Abführen des Kondensats in der Kapillarstruktur stehen weiterhin eine kalte, insbesondere metallische, Fläche und somit ein vorteilhafter Wärmeübergang zur Verfügung, um eine erneute Kondensation des wenigstens einen Fluids, insbesondere des ersten Fluids, zu bewirken. Die Gleichgewichtsbildung auf der Grenzfläche zwischen Gas und Flüssigkeit wird dadurch gestört, wodurch sich die Kinetik des Kondensierens beschleunigt.

In weiterer Ausgestaltung der Erfindung ist es denkbar, dass in zwischen den hohlen Stäben und den hohlen Knoten gebildeten Zwischenräumen ein Katalysator angeordnet ist, welcher somit außenseitig der Hohlgitterstruktur angeordnet ist. Durch den Katalysator kann beispielsweise wenigstens eine chemische Reaktion des ersten Fluids beziehungsweise in dem ersten Fluid bewirkt werden. Insbesondere kann das erste Fluid durch die durch den Katalysator bewirkte beziehungsweise unterstütze chemische Reaktion zu einem kondensierbaren Reaktionsprodukt reagieren, welches beispielsweise durch das poröse Feingitter kondensiert und abgeleitet werden kann.

Wird der Wärmetauscher beispielsweise genutzt, um das wenigstens eine Fluids, insbesondere das erste Fluid, zu kühlen sowie zu kondensieren, so ist der Wärmetauscher ein Kondensationsapparat beziehungsweise der Wärmetauscher wird dann als Kondensationsapparat bezeichnet. Dabei ist es denkbar, dass die erste Zone von dem zweiten Fluid und die zweite Zone von dem zuvor genannten dritten Fluid durchströmt wird, insbesondere während das die erste Zone durchströmende zweite Fluid die erste Temperatur und das die zweite Zone durchströmende dritte Fluid die von der ersten Temperatur unterschiedliche und insbesondere gegenüber der ersten Temperatur geringere zweite Temperatur aufweist. Dabei herrscht beispielsweise in der ersten Zone ein Temperaturniveau, das gerade eben die Kondensation des ersten Fluids ermöglicht, jedoch mit einer thermodynamisch wertvollen hohen Temperatur abgezogen wird. Die zweite Zone ist eine weitere Temperaturzone, welche beispielsweise in Einbaulage des Wärmetauschers in vertikaler Richtung unterhalb der ersten Zone angeordnet ist und das kondensierte Fluid kalt hält beziehungsweise noch weiter abkühlt, sodass beispielsweise bei einer Entnahme des Kondensats beispielsweise aus einem Hochdruckbereich sowie beispielsweise bei einer Entspannung des Kondensats keine weitere Verdampfung des Kondensats stattfindet. Hierbei kann der Wärmetauscher beispielsweise als Phasengleichgewichts-Kondensations-Kühler und als Unterkühlung-Kühler fungieren.

Auf diese Weise kann eine fraktionierte Kondensation durchgeführt werden, sodass beispielsweise zunächst eine bei der ersten Temperatur kondensierbare erste Komponente des wenigstens einen Fluids, insbesondere des ersten Fluids, dem wenigstens einen Fluids, insbesondere dem ersten Fluid, abgezogen wird, wobei die erste Komponente als Flüssigkeit dem wenigstens einen Fluid abgezogen wird. Strömt die von dem wenigstens einen Fluid abgezogene kondensierte Komponente dann durch die zweite Zone, so wird die kondensierte Komponente durch die zweite Zone beziehungsweise in der zweiten Zone durch das dritte Fluid weiter abgekühlt. Dieser Vorgang lässt sich für mehrere Komponenten durch verschiedene Kondensationssysteme und Fluide auf unterschiedlichen Temperaturniveaus durchführen, sodass eine fraktionierte Auskondensation darstellbar ist, indem beispielsweise ähnliche oder gleiche Systeme verschaltet werden.

Ein zweiter Aspekt der Erfindung betrifft ein Verfahren zum Herstellen eines Wärmetauschers, insbesondere eines Wärmetauschers gemäß dem ersten Aspekt der Erfindung, zum Temperieren wenigstens eines Fluids. Bei dem Verfahren wird wenigstens eine Hohlgitterstruktur hergestellt, die mehrere hohle Stäbe aufweist, welche an jeweiligen hohlen Knoten der Hohlgitterstruktur mechanisch und fluidisch miteinander verbunden werden.

Die Stäbe und die Knoten und somit die Hohlgitterstruktur sind außenseitig von dem einem Fluid umströmbar und innenseitig von einem zweiten Fluid durchströmbar, sodass wenigstens eines der Fluide, insbesondere das erste Fluid, infolge eines Wärmeaustausches mit dem jeweils anderen Fluid, insbesondere mit dem zweiten Fluid, über die Hohlgitterstruktur temperierbar ist. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Ein dritter Aspekt der Erfindung betrifft ein Verfahren zum Temperieren, insbesondere zum Erwärmen und/oder Kühlen, wenigstens eines Fluids durch einen Wärmetauscher, insbesondere gemäß dem ersten Aspekt der Erfindung. Der Wärmetauscher weist wenigstens eine Hohlgitterstruktur mit mehreren hohlen Stäben auf, die an jeweiligen hohlen Knoten der Hohlgitterstruktur mechanisch und fluidisch miteinander verbunden sind. Dadurch sind die hohlen Stäbe über die hohlen Knoten mechanisch und fluidisch miteinander verbunden.

Bei dem Verfahren wird die Hohlgitterstruktur außenseitig von einem ersten Fluid umströmt und innenseitig von einem zweiten Fluid durchströmt, sodass wenigstens eines der Fluide, insbesondere das erste Fluid, in Folge eines Wärmeaustausches mit dem jeweils anderen Fluid, insbesondere mit dem zweiten Fluid, über die Hohlgitterstruktur temperiert wird. Mit anderen Worten findet bei dem Verfahren ein Wärmeaustausch zwischen den Fluiden über die Hohlgitterstruktur statt. Dabei weisen die Fluide voneinander unterschiedliche Temperaturen auf, sodass das zweite Fluid wärmer oder vorzugsweise kühler als das erste Fluid ist, während sie durch die Hohlgitterstruktur durchströmen beziehungsweise diese umströmen. Vorteile und vorteilhafte Ausgestaltungen des ersten Aspekts der Erfindung des zweiten Aspekts der Erfindung sind als Vorteile und vorteilhafte Ausgestaltungen des dritten Aspekts der Erfindung anzusehen und umgekehrt.

Beispielsweise wird das erste Fluid bei dem Verfahren gekühlt und vorzugsweise kondensiert. Hierzu erfolgt ein Wärmeübergang von dem ersten Fluid über die Hohlgitterstruktur an das zweite Fluid. Dieser Wärmeübergang wird beispielsweise dadurch bewirkt, dass das erste Fluid eine erste Temperatur aufweist, während es die Hohlgitterstruktur umströmt, und dass das zweite Fluid eine gegenüber der ersten Temperatur geringere zweite Temperatur aufweist, während das zweite Fluid die Hohlgitterstruktur durchströmt.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- FIG 1: eine schematische Vorderansicht eines erfindungsgemäßen Wärmetauschers gemäß einer ersten Ausführungsform;
- FIG 2: ausschnittsweise eine schematische Schnittansicht eines Hohlstabs einer Hohlgitterstruktur des Wärmetauschers gemäß einer zweiten Ausführungsform;
- FIG 3: ausschnittsweise eine schematische Schnittansicht des Wärmetauchers gemäß einer dritten Ausführungsform;
- FIG 4: ausschnittsweise eine weitere schematische Schnittansicht des Wärmetauschers gemäß der dritten Ausführungsform;
- FIG 5: eine schematische Schnittansicht des Wärmetauschers gemäß einer vierten Ausführungsform;
- FIG 6: ausschnittsweise eine schematische und geschnittene Perspektivansicht des Wärmetauschers gemäß einer fünften Ausführungsform;
- FIG 7: ausschnittsweise eine schematische und geschnittene Seitenansicht des Wärmetauschers gemäß einer sechsen Ausführungsform; und
- FIG 8: ausschnittsweise eine schematische Schnittansicht des Wärmetauschers gemäß einer siebten Ausführungsform.

In den Figuren sind gleiche oder funktionsgleiche Elemente mit gleichen Bezugszeichen versehen.

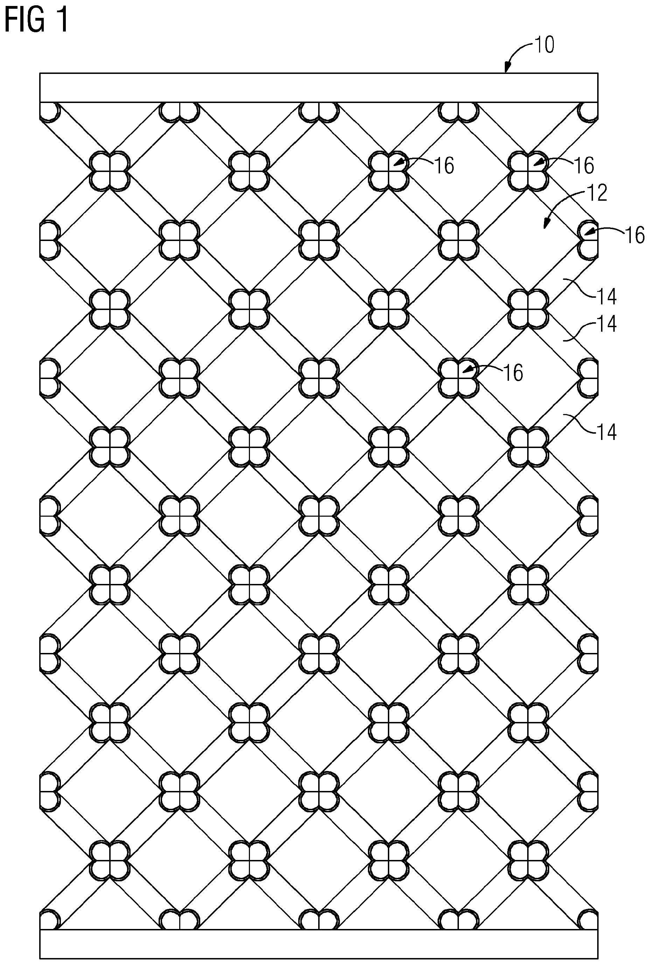

FIG 1 zeigt in einer schematischen Vorderansicht einen Wärmetauscher 10 zum Temperieren wenigstens eines Fluids. Unter dem Temperieren ist zu verstehen, dass das wenigstens eine Fluid gekühlt oder erwärmt wird, ohne beispielsweise eine gezielte Regelung oder Steuerung einer Temperatur des wenigstens einen Fluids durchzuführen.

Vorzugsweise wird der Wärmetauscher 10 verwendet, um das wenigstens eine Fluid zu kühlen und dadurch zu kondensieren, sodass im Rahmen einer Verwendung des Wärmetauschers 10 zum Temperieren, insbesondere zum Kühlen, des wenigstens einen Fluids eine Kondensation zumindest einer Komponente des wenigstens einen Fluids durch den Wärmetauscher 10 bewirkt wird. Das wenigstens eine Fluid ist ein erstes Fluid beziehungsweise wird auch als erstes Fluid bezeichnet. Da die zumindest eine Komponente des ersten Fluids kondensiert wird, wird die zumindest eine Komponente des ersten Fluids dem ersten Fluid entzogen, insbesondere indem ein Phasenübergang der zumindest einen Komponente von gasförmig zu flüssig durch den Wärmetauscher 10 bewirkt wird.

FIG 1 veranschaulicht eine erste Ausführungsform des Wärmetauschers 10. Wie besonders gut aus FIG 1 erkennbar ist, weist der Wärmetauscher 10 wenigstens eine Hohlgitterstruktur 12 auf, welche mehrere, auch als Hohlstäbe bezeichnete Stäbe 14 aufweist. Außerdem weist die Hohlgitterstruktur 12 mehrere, auch als Hohlknoten bezeichnete hohle Knoten 16 auf, an welchen die Hohlstäbe mechanisch und fluidisch miteinander verbunden sind. Mit anderen Worten sind die Hohlstäbe über die Hohlknoten mechanisch und fluidisch miteinander verbunden, sodass die Hohlgitterstruktur 12 innenseitig, das heißt in ihrem Inneren von einem zweiten Fluid durchströmbar ist. Dies bedeutet, dass das zweite Fluid die Hohlstäbe und die Hohlknoten und somit die Hohlgitterstruktur 12 durchströmen kann. Während eines Betriebs des Wärmetauschers 10 wird somit die Hohlgitterstruktur 12 innenseitig von dem zweiten Fluid durchströmt. Vorzugsweise wird als das zweite Fluid eine Flüssigkeit verwendet, sodass das zweite Fluid in flüssigem Zustand durch die Hohlgitterstruktur 12 hindurchströmt. Wird beispielsweise durch den Wärmetauscher 10 das erste Fluid derart temperiert, dass das erste Fluid gekühlt wird, so wird das zweite Fluid auch als Kühlmedium oder Kühlfluid, insbesondere Kühlflüssigkeit, bezeichnet. Die Hohlgitterstruktur 12 und somit die Hohlstäbe und die Hohlknoten sind außenseitig beziehungsweise außenumfangsseitig von dem ersten Fluid umströmbar, welches in Folge eines Wärmeaustausches mit dem zweiten Fluid über die Hohlgitterstruktur 12 temperierbar ist. Mit anderen Worten, während die Hohlgitterstruktur 12 innenseitig von dem zweiten Fluid durchströmt wird, wird die Hohlgitterstruktur 12 außenumfangsseitig und somit auf einer von dem zweiten Fluid abgewandten, außenumfangsseitigen Oberfläche beziehungsweise Mantelfläche von dem ersten Fluid umströmt. Hierdurch kann über die Hohlgitterstruktur 12 ein Wärmeaustausch zwischen den Fluiden erfolgen. Ist beispielsweise das zweite Fluid kühler als das erste Fluid, so erfolgt ein Wärmeübergang von dem ersten Fluid über die Hohlgitterstruktur 12 an das zweite Fluid, wodurch das erste Fluid gekühlt und vorzugsweise kondensiert wird.

Vorzugsweise ist die Hohlgitterstruktur 12 einstückig und somit als ein Monolith ausgebildet. Um dabei die Hohlgitterstruktur 12 besonders bauraum- und kostengünstig herstellen zu können, ist beziehungsweise wird die Hohlgitterstruktur 12 durch ein generatives Fertigungsverfahren wie beispielsweise selektives Laserschmelzen hergestellt. Hierdurch kann der Bauraumbedarf des Wärmetauschers 10 besonders gering gehalten werden, wobei gleichzeitige übermäßige Druckverluste des jeweiligen Fluids vermieden werden können. Vorzugsweise wird die Hohlgitterstruktur 12 aus einem metallischen Werkstoff, insbesondere aus einem Metallpulver, hergestellt.

Dabei hat es sich als besonders vorteilhaft gezeigt, wenn die Hohlstäbe einen Innendurchmesser aufweisen, welcher in einem Bereich von einschließlich 0,1 mm bis einschließlich 10 mm, insbesondere in einem Bereich von einschließlich 0,8 mm bis einschließlich 3 mm, liegt. Alternativ oder zusätzlich weist die Hohlgitterstruktur 12, insbesondere die gesamte Hohlgitterstruktur 12, eine auch als Wandstärke bezeichnete Wanddicke auf, welche in einem Bereich von einschließlich 0,1 mm bis einschließlich 1 mm, insbesondere in einem Bereich von einschließlich 0,2 mm bis einschließlich 0,9 mm und vorzugsweise in einem Bereich von einschließlich 0,3 mm bis einschließlich 0,7 mm, liegt.

Bei der in FIG 1 veranschaulichten ersten Ausführungsform ist die Hohlgitterstruktur 12 insgesamt gleichmäßig aufgebaut, sodass die Hohlgitterstruktur 12 genau einen, durch die Hohlstäbe und durch die Hohlknoten gebildeten Gittertyp aufweist. Somit begrenzen beispielsweise die Hohlstäbe und die Hohlknoten jeweilige Gitter oder Gitterzellen, die dadurch, dass die Hohlgitterstruktur 12 bei der ersten Ausführungsform gleichmäßig aufgebaut ist, gleich groß sind. Alternativ ist es denkbar, dass die Hohlgitterstruktur 12 wenigstens zwei voneinander unterschiedliche, durch die Hohlstäbe und durch die Hohlknoten gebildete Gittertypen aufweist, welche sich beispielsweise dadurch voneinander unterscheiden, dass die Gitterzellen eines ersten der Gittertypen eine erste Größe und die Gitterzellen eines zweiten der Gittertypen eine von der ersten Größe unterschiedliche zweite Größe aufweisen. Die Gitter beziehungsweise Gitterzellen sind die kleinste Einheit der Hohlgitterstruktur 12, wobei sich diese kleinste Einheit wiederholt, um die Hohlgitterstruktur 12 aufzubauen.

Dadurch, dass die Hohlgitterstruktur 12 vorzugsweise einstückig ausgebildet ist, sind die Hohlstäbe vorzugsweise einstückig mit den Hohlknoten ausgebildet, sodass die Hohlstäbe und die Hohlknoten ein einziges Stück oder Bauteil bilden. Die in Fig. 1 gezeigte Hohlgitterstruktur 12 kann selbstverständlich auch für die anderen Ausführungsformen des Wärmetauschers 10 verwendet werden.

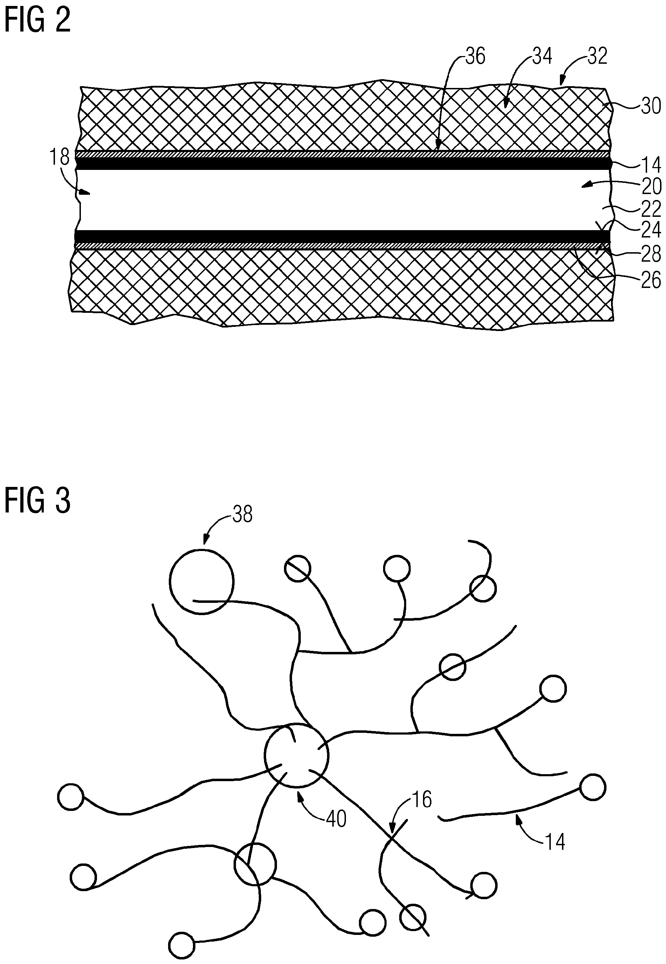

FIG 2 zeigt eine zweite Ausführungsform des Wärmetauschers 10. In FIG 2 ist einer der Stäbe 14 erkennbar. Somit zeigt beispielsweise FIG 2 eine mögliche Ausgestaltung des Stabs 14, wobei der Stab 14 beziehungsweise die in FIG 2 gezeigten Ausgestaltung auch bei den anderen Ausführungsformen verwendet werden kann.

Wie besonders gut aus FIG 2 erkennbar ist, weist der jeweilige Hohlstab einen zumindest im Wesentlichen geradlinigen Verlauf auf. Mit anderen Worten erstreckt sich der jeweilige Hohlstab, insbesondere über seine gesamte Längserstreckung, geradlinig. Somit erstreckt sich beispielsweise der jeweilige Hohlstab von einem jeweiligen ersten der Hohlknoten zu einem jeweiligen zweiten der Hohlknoten durchgängig beziehungsweise ausschließlich geradlinig, wobei der jeweilige Hohlstab einerseits beziehungsweise einenends fluidisch und mechanisch mit dem ersten Hohlknoten und andererseits beziehungsweise andernends fluidisch und mechanisch mit dem zweiten Hohlknoten verbunden ist. Dadurch kann beispielsweise das zweite Fluid zunächst durch den ersten Hohlknoten hindurchströmen und dann von dem ersten Hohlknoten in den Hohlstab einströmen und dann den Hohlstab durchströmen. Durch den Hohlstab wird das zweite Fluid zu dem zweiten Hohlknoten geführt, sodass das den Hohlstab durchströmende zweite Fluid aus dem Hohlstab ausströmen, in den zweiten Hohlknoten einströmen und den zweiten Hohlknoten durchströmen kann. Ausgehend von dem jeweiligen Hohlknoten erstrecken sich die jeweiligen Hohlstäbe geradlinig sowie vorzugsweise sternförmig von dem jeweiligen Hohlknoten weg zu einem jeweils anderen der Hohlknoten. Somit ist beispielsweise jeder Hohlstab, welcher einerseits mit einem der Hohlknoten verbunden ist, andererseits mit einem jeweils anderen der Hohlknoten verbunden.

Außerdem ist in FIG 2 das beispielsweise als Kühlmittel fungierende zweite Fluid erkennbar und mit 18 bezeichnet. Da der jeweilige Hohlstab hohl ausgebildet ist, weist der jeweilige Hohlstab in seinem Inneren 20 einen von dem zweiten Fluid durchströmbaren Kanal 22 auf, welcher beispielsweise den zuvor genannten Innendurchmesser aufweist. Der Kanal 22 ist von einer innenumfangsseitigen Mantelfläche 24 des jeweiligen Hohlstabs und somit der Hohlgitterstruktur 12 begrenzt. Die innenumfangsseitige Mantelfläche 24 wird durch eine feste Wand 26 des jeweiligen Hohlstabs beziehungsweise der Hohlgitterstruktur 12 gebildet. Die Wand 26 bildet auch eine der innenumfangsseitigen Mantelfläche 24 abgewandte außenumfangsseitige Mantelfläche 28, welche beispielsweise von dem ersten Fluid umströmbar ist. Das den Kanal 22 und somit den jeweiligen Hohlstab durchströmende zweite Fluid 18 kann somit die innenumfangsseitige Mantelfläche 24 direkt beziehungsweise unmittelbar kontaktieren. Mit anderen Worten kontaktiert beziehungsweise berührt das den jeweiligen Hohlstab durchströmende zweite Fluid die jeweilige innenumfangsseitige Mantelfläche 24 des jeweiligen Hohlstabs direkt beziehungsweise unmittelbar. Das die Hohlstäbe und die Hohlknoten umströmende erste Fluid berührt beziehungsweise kontaktiert die außenumfangsseitige Mantelfläche 28 unmittelbar beziehungsweise direkt.

Bei der zweiten Ausführungsform ist die Hohlgitterstruktur 12 zumindest in einem Teilbereich, vorzugsweise zumindest in einem überwiegenden Teilbereich und vorzugsweise vollständig, außenseitig mit einer porösen und von dem ersten Fluid durchströmbaren Schicht 30 versehen, welche auch als poröses Feingitter bezeichnet wird beziehungsweise ein poröses Feingitter bildet. Die Schicht 30 bildet beispielsweise Kanäle, durch die das erste Fluid hindurchströmen kann. Bei der zweiten Ausführungsform weist die vorzugsweise mikroporöse Schicht 30 mehrere, übereinander angeordnete Schichtteile 32, 34 und 36 auf, welche sich beispielsweise in ihrer jeweiligen Porosität voneinander unterscheiden. Somit bilden die Schichtteile 32, 34 und 36 beispielsweise jeweilige, sich in ihren Größen voneinander unterscheidenden Poren oder Kanäle. Der Schichtteil 32 ist beispielsweise eine Diffusionsschicht. Der Schichtteil 34 ist beispielsweise eine thermische Isolierschicht, und der Schichtteil 36 ist beispielsweise eine Kapillarschicht. Durch die Kapillarschicht kann beispielsweise ein aus dem als Kühlen ausgebildeten Temperieren des ersten Fluids resultierendes Kondensat durch Kapillarkräfte beziehungsweise Kapillareffekte, die durch die Kapillarschicht bewirkbar sind, gezielt geführt, insbesondere abgeführt beziehungsweise abgeleitet, werden. Mit anderen Worten kann beispielsweise das Kondensat aus dem ersten Fluid durch die Kapillarschicht durch Kapillarkräfte gezielt und geführt und geleitet und somit beispielsweise in eine Kondensatsammelzone geführt werden, in welcher das Kondensat aufgefangen und gesammelt werden kann. Somit sind beispielsweise die Poren oder Kanäle der Kapillarschicht derart ausgebildet, insbesondere in ihrer Größe, dass sie bezüglich des Kondensats aus dem ersten Fluid Kapillarkräfte bewirken, durch welche das Kondensat geführt beziehungsweise geleitet wird. Wieder mit anderen Worten ausgedrückt resultiert beispielsweise aus der Kondensation der zumindest einen Komponente des ersten Fluids das zuvor genannte Kondensat, welches durch die durch die Kapillarschicht bewirkten Kapillarkräfte gezielt geführt beziehungsweise geleitet werden kann.

Die Schichtteile 32, 34 und 36 unterscheiden sich beispielsweise hinsichtlich ihrer Porositäten, wobei der Schichtteil 32 feiner porös ist als der Schichtteil 34. Der Schichtteil 34 ist grober porös als der Schichtteil 36. Mit anderen Worten sind beispielsweise die Poren oder Kanäle des Schichtteils 32 kleiner als die Poren beziehungsweise die Kanäle des Schichtteils 34, wobei die Poren beziehungsweise die Kanäle des Schichtteils 36 kleiner sind als die Poren beziehungsweise die Kanäle des Schichtteils 34. Der Schichtteil 36 liegt vorzugsweise direkt beziehungsweise unmittelbar an der Wand 26 und somit an dem jeweiligen Hohlstab an. Insgesamt ist auf FIG 2 erkennbar, dass beispielsweise der jeweilige Hohlstab, insbesondere die jeweilige außenumfangsseitige Mantelfläche 28, mit der Schicht 30 versehen, insbesondere beschichtet oder überzogen, ist.

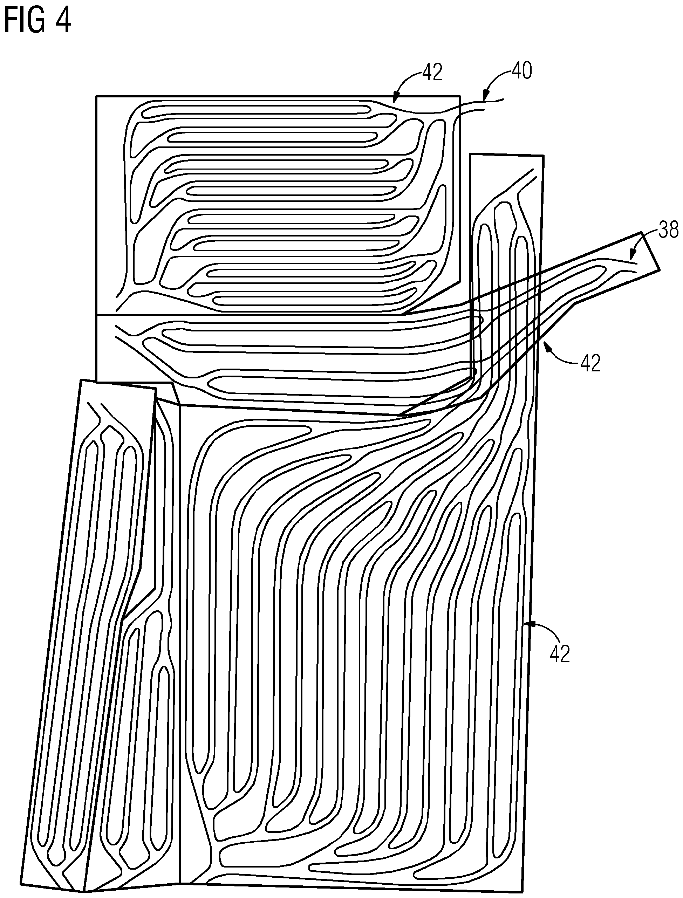

FIG 3 und 4 zeigen eine dritte Ausführungsform. Insbesondere zeigen FIG 3 und 4 eine mögliche Ausgestaltung, welche selbstverständlich auch bei den anderen Ausführungsformen verwendet werden kann. Bei der dritten Ausführungsform weist der Wärmetauscher 10 wenigstens oder genau einen den Hohlstäben und den Hohlknoten gemeinsamen und von dem zweiten Fluid durchströmbaren Zulaufkanal 38 auf, über welchen die Hohlstäbe und die Hohlknoten und somit die Hohlgitterstruktur 12 mit dem zweiten Fluid versorgbar sind.

Ferner können mehrere erste der Hohlstäbe eine erste Hohlstabgruppe und mehrere, von den ersten Hohlstäben unterschiedliche zweite der Hohlstäbe eine zweite Hohlstabgruppe bilden. Dabei ist beispielsweise ein den Hohlstäben der ersten Hohlstabgruppe gemeinsamer erster Zulaufkanal 38 und ein den Hohlstäben der zweiten Hohlstabgruppe gemeinsamer zweiter Zulaufkanal 40 vorgesehen, wobei beispielsweise die Hohlstäbe der ersten Hohlstabgruppe über den Zulaufkanal 38 und die Hohlstäbe der zweiten Hohlstabgruppe über den Zulaufkanal 40 mit dem zweiten Fluid versorgbar sind. Die Zulaufkanäle 38 und 40 sind dabei von dem zweiten Fluid durchströmbar. Mit anderen Worten sind beispielsweise dem Zulaufkanal 38 die Hohlstäbe der ersten Hohlstabgruppe und dem Zulaufkanal 40 die Hohlstäbe der zweiten Hohlstabgruppe zugeordnet. Auf diese Weise kann das zweite Fluid besonders großflächig in die Hohlgitterstruktur 12 eingeleitet werden. Besonders gut aus FIG 4 ist erkennbar, dass der jeweilige Zulaufkanal 38 beziehungsweise 40 stromauf der Hohlgitterstruktur 12 in mehrere, von dem zweiten Fluid durchströmbare Zulaufteilkanäle 42 aufzweigt, welche eine beispielsweise baumartige oder astartige, verzweigte Verteilstruktur bilden. Die Verteilstruktur ist eine verzweigte Struktur, welche in Strömungsrichtung des in die Hohlgitterstruktur 12 einströmenden zweiten Fluids stromab des jeweiligen Zulaufkanals 38 beziehungsweise 40 und stromauf der Hohlgitterstruktur 12 angeordnet ist. Durch die jeweilige Verteilstruktur kann das zweite Fluid besonders vorteilhaft und großflächig in die Hohlgitterstruktur 12 eingeleitet werden, sodass das zweite Fluid nicht etwa an genau einer Stelle, sondern an mehreren Stellen gleichzeitig in die Hohlgitterstruktur 12 eingeleitet werden kann beziehungsweise wird. Die genannten Stellen sind beispielsweise in FIG 3 durch in FIG 3 gezeigte kleine Kreise veranschaulicht.

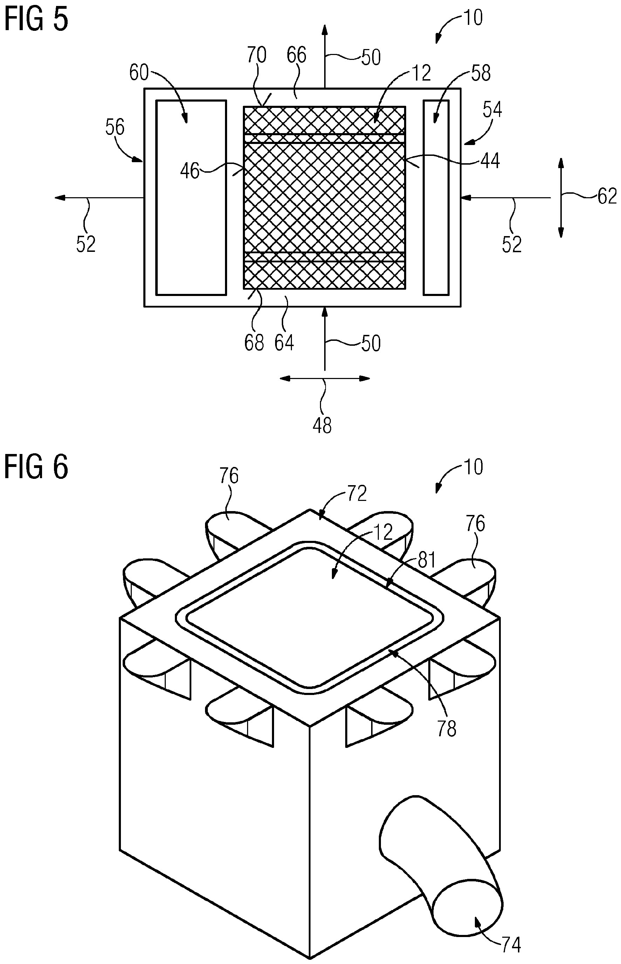

FIG 5 zeigt eine vierte Ausführungsform des Wärmetauschers 10. Die Hohlgitterstruktur 12 weist eine erste Seite 44 und eine zweite Seite 46 auf, wobei die zweite Seite 46 der ersten Seite 44 entlang einer durch einen Doppelpfeil 48 veranschaulichten ersten Erstreckungsrichtung der Hohlgitterstruktur 12 abgewandt ist. Die erste Erstreckungsrichtung verläuft beispielsweise schräg oder vorliegend senkrecht zu einer in FIG 5 durch Pfeile 50 veranschaulichten Strömungsrichtung, in die das erste Fluid außenseitig der Hohlgitterstruktur 12 durch diese hindurchströmt beziehungsweise die Hohlgitterstruktur 12 außenseitig umströmt.

Wie in FIG 5 darüber hinaus durch Pfeile 52 veranschaulicht ist, wird beispielsweise das zweite Fluid in eine zweite Strömungsrichtung in die Hohlgitterstruktur 12 eingeleitet und in die zweite Strömungsrichtung aus der Hohlgitterstruktur 12 ausgeleitet beziehungsweise von der Hohlgitterstruktur 12 abgeführt, wobei die zweite Strömungsrichtung schräg oder vorliegend senkrecht zur ersten Strömungsrichtung verläuft. FIG 5 zeigt eine Ausgestaltung, welche selbstverständlich auch bei den anderen Ausführungsformen ohne weiteres zum Einsatz kommen kann.

Die Hohlgitterstruktur 12 ist dabei entlang der durch den Doppelpfeil 48 verlaufenden Erstreckungsrichtung zwischen zwei Wänden 54 und 56 angeordnet, welche auch als erste Wände bezeichnet werden. Die Wand 54 ist dabei auf der Seite 44 angeordnet, während die Wand 56 auf der Seite 46 angeordnet ist. Vorzugsweise berührt die Wand 54 die Seite 44 direkt beziehungsweise unmittelbar, und vorzugsweise berührt die Wand 56 die Seite 46 direkt beziehungsweise unmittelbar. Die Wände 54 und 56 sind von dem zweiten Fluid durchströmbar, wobei die Hohlgitterstruktur 12 über die Wand 54 mit dem zweite Fluid versorgbar ist, und wobei das zweite Fluid über die Wand 56 aus der Hohlgitterstruktur 12 abführbar ist. Hierzu weist die Wand 54 wenigstens einen von dem zweiten Fluid durchströmbaren und innerhalb der Wand 54 verlaufenden Kanal 58 auf, und die Wand 56 weist einen von dem zweiten Fluid durchströmbaren und innerhalb der Wand 56 verlaufenden Kanal 60 auf. Die Wände 54 und 56 bilden beispielsweise einen Block. Alternativ oder zusätzlich können die Wände 54 und 56 einstückig miteinander ausgebildet sein. Die Wände 54 und 56 können durch ein oder das generative Fertigungsverfahren hergestellt sein.

Alternativ oder zusätzlich ist es denkbar, dass die Hohlgitterstruktur 12 entlang einer in FIG 5 durch einen Doppelpfeil 62 veranschaulichten und senkrecht zur ersten Erstreckungsrichtung verlaufenden zweiten Erstreckungsrichtung zwischen zwei zweiten Wänden 64 und 66 angeordnet ist. Die Wand 64 ist dabei auf einer zweiten Seite 68 der Hohlgitterstruktur 12 angeordnet, wobei die Wand 66 auf einer vierten Seite 70 der Hohlgitterstruktur 12 angeordnet ist. Dabei ist die Seite 70 der Seite 68 entlang der zweiten Erstreckungsrichtung abgewandt beziehungsweise umgekehrt. Die Wand 64 berührt vorzugsweise die Seite 68 unmittelbar beziehungsweise direkt, und alternativ oder zusätzlich berührt die Wand 66 die Seite 70 unmittelbar beziehungsweise direkt. Beispielsweise sind die Wände 64 und 66 von dem ersten Fluid durchströmbar. Dabei ist beispielsweise die Hohlgitterstruktur 12 außenseitig über die Wand 64 mit dem ersten Fluid versorgbar, wobei beispielsweise das erste Fluid über die Wand 66 von der Hohlgitterstruktur 12 abführbar ist. Wieder mit anderen Worten ausgedrückt wird beispielsweise das erste Fluid über die Wand 64 in die Hohlgitterstruktur 12 eingeströmt und über die Wand 66 von der Hohlgitterstruktur 12 abgeführt beziehungsweise aus dieser ausgeströmt.

Das erste Fluid umfasst beispielsweise als eine erste Komponente Wasserstoff (H₂) und als eine zweite Komponente Kohlendioxid (CO₂), wobei die erste Komponente und/oder die zweite Komponente die zumindest eine Komponente ist, welche beispielsweise unter Entstehung des Kondensats kondensiert wird. Als das zweite Fluid wird beispielsweise flüssiges Wasser verwendet.

Die Wände 64 und 66 bilden beispielsweise einen Block. Alternativ oder zusätzlich sind die Wände 64 und 66 einstückig miteinander ausgebildet, wobei die Wände 64 und 66 durch das generative Fertigungsverfahren hergestellt sein können. Insbesondere ist es denkbar, dass die Wände 54, 56, 64 und 66 einen Block bilden und/oder einstückig miteinander ausgebildet und/oder durch das generative Fertigungsverfahren hergestellt sind.

FIG 6 zeigt eine fünfte Ausführungsform, bei welchem die Hohlgitterstruktur 12 in einen vorliegend außenumfangsseitig rechteckigen Flansch 72 eingesetzt ist. Der Flansch 72 ist beziehungsweise wird beispielsweise durch den zuvor genannten Block gebildet. Dabei ist beispielsweise ein Zulauf 74 vorgesehen, über welchen beispielsweise das zweite Fluid in die Wand 54 und dabei in den Kanal 58 eingeleitet werden kann. Der Flansch 72 und die Hohlgitterstruktur 12 sind miteinander verbunden, insbesondere einstückig miteinander ausgebildet. An dem Flansch 72 sind Auskragungen 76 vorgesehen, insbesondere für Verschraubungen. Mit anderen Worten kann beispielsweise der Wärmetauscher 10 über den Flansch 72 und dabei insbesondere über die Auskragungen 76 mit wenigstens einer weiteren Komponente verschraubt und dadurch verbunden werden.

Hierzu weist die jeweilige Auskragung 76 beispielsweise wenigstens eine als Schrauböffnung ausgebildete Öffnung auf, in welcher ein Schraubelement insbesondere in Form einer Schraube zumindest teilweise aufnehmbar ist. In der Schrauböffnung ist beispielsweise ein Gewinde, insbesondere ein Innengewinde, ausgebildet, in das das Schraubelement eingeschraubt werden kann, um dadurch den Wärmetauscher 10 mit der Komponente zu verschrauben und somit zu verbinden.

Außerdem ist eine auch als Dichtungsnut bezeichnete Nut 78 vorgesehen, welche beispielsweise in der Hohlgitterstruktur 12 oder aber in dem Flansch 72 ausgebildet ist. In der Nut 78 ist ein Dichtungselement zumindest teilweise aufnehmbar, durch welches der Wärmetauscher 10 gegen die Komponente abgedichtet werden kann. Das Dichtungselement ist vorzugsweise aus einem elastisch verformbaren Werkstoff, insbesondere Gummi, gebildet. Aus FIG 6 ist erkennbar, dass die Nut 78 rechteckig ausgebildet ist und dabei abgerundete oder verrundete Ecken aufweist, sodass eine verrundet-rechteckige Dichtungsführung durch die Nut 78 gebildet ist. Dadurch kann der Wärmetauscher 10 besonders gut gegen die Komponente abgedichtet werden. Beispielsweise ist die Komponente von dem ersten Fluid durchströmbar und dabei beispielsweise als von dem ersten Fluid durchströmbares Rohr ausgebildet. Vorzugsweise ist das erste Fluid gasförmig beziehungsweise vorzugsweise strömt das erste Fluid gasförmig durch die Komponente und dabei von der Komponente zu der Hohlgitterstruktur 12.

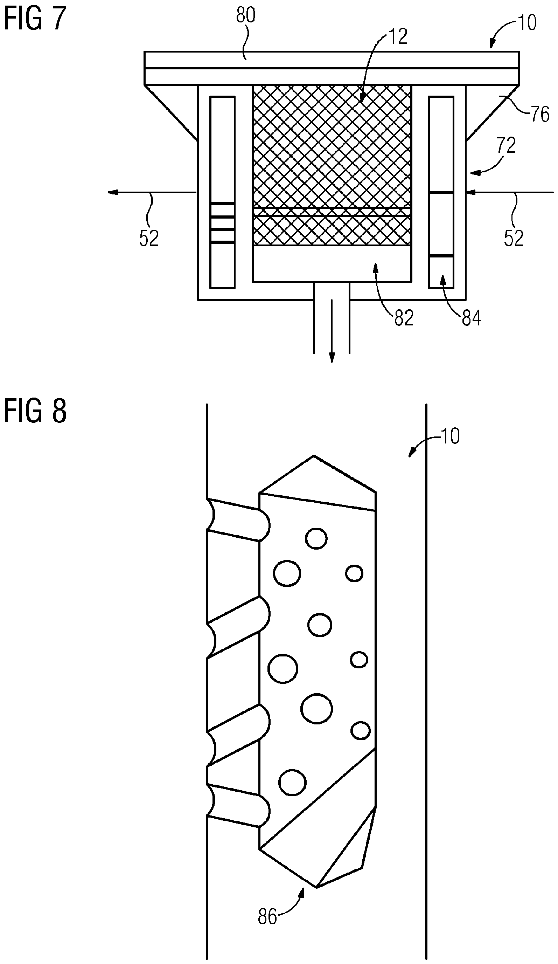

FIG 7 zeigt eine sechste Ausführungsform des Wärmetauschers 10. In FIG 7 ist die Komponente erkennbar und mit 80 bezeichnet. Die Komponente ist beispielsweise ein Deckel. Der Flansch 72 weist dabei beispielsweise eine Aufnahme 81 (Fig. 6) auf, in welcher die Hohlgitterstruktur 12 angeordnet ist. Dabei ist beispielsweise die Aufnahme 81 beziehungsweise eine Öffnung der Aufnahme 81 auf einer Seite durch den Deckel 80 überdeckt und somit verschlossen, wobei der Deckel 80 durch das Dichtungselement gegen den Flansch 72 abgedichtet ist. Außerdem ist in FIG 7 die zuvor genannte Kondensatsammelzone erkennbar und mit 82 bezeichnet. Die Kondensatsammelzone 82 kann eine poröse, insbesondere feinporöse, Schicht 84 aufweisen oder die poröse, insbesondere feinporöse, Schicht ist in Einbaulage des Wärmetauschers 10 in vertikaler Richtung unterhalb der Kondensatsammelzone 82 angeordnet. Der Wärmetauscher 10 nimmt seine Einbaulage in vollständig hergestelltem Zustand des Wärmetauschers 10 und insbesondere während eines Betriebs des Wärmetauschers 10 ein, während dessen Betrieb das erste Fluid über den Wärmetauscher 10 durch das zweite Fluid temperiert und dabei insbesondere gekühlt sowie vorzugsweise kondensiert wird. In der Kondensatsammelzone 82 kann sich das Kondensat sammeln. Das Kondensat kann beispielsweise die poröse Schicht 84 durchströmen und insbesondere aus der Kondensatsammelzone 82 über die poröse Schicht 84 und dabei durch die poröse Schicht 84 hindurch abgesaugt beziehungsweise abgesogen werden, insbesondere in Einbaulage des Wärmetauschers 10 in vertikaler Richtung nach unten. Die Kondensatsammelzone 82 ist beispielsweise ein Tiefsumpf, in welchem sich das Kondensat sammelt. Aus dem Tiefsumpf kann das Kondensat, insbesondere über die poröse Schicht 84 und dabei durch die poröse Schicht 84 hindurch abgeleitet und insbesondere abgesaugt beziehungsweise abgesogen werden. Durch die zuvor genannten und durch die Kapillarschicht bewirkten Kapillarkräfte wird das Kondensat, welches sich beispielsweise an der außenumfangsseitigen Mantelfläche 28 der Hohlstäbe und somit der Hohlgitterstruktur 12 bildet, gezielt in die Kondensatsammelzone 82 geleitet und kann sich dort sammeln.

Die Hohlgitterstruktur 12 ist beispielsweise eine erste Zone oder weist eine Zone auf, in welcher das zweite Fluid mit einer ersten Fluidtemperatur durch die Hohlgitterstruktur 12 hindurchströmt, insbesondere während des Betriebs des Wärmetauschers 10. In Einbaulage des Wärmetauschers 10 in vertikaler Richtung unterhalb der ersten Zone und vorzugsweise unterhalb der Kondensatsammelzone 82, die in Einbaulage des Wärmetauschers 10 in vertikaler Richtung unterhalb der ersten Zone angeordnet sein kann, weist der Wärmetauscher 10 vorzugsweise eine zweite Zone auf, in welcher beispielsweise ein drittes Fluid mit einer von der ersten Fluidtemperatur unterschiedlichen zweiten Temperatur durch den Wärmetauscher 10 strömt. Insbesondere ist die zweite Fluidtemperatur geringer als die erste Fluidtemperatur. Vorzugsweise wird als das dritte Fluid eine Flüssigkeit verwendet. Die zweite Zone kann Teil der Hohlgitterstruktur 12 sein. Ferner ist es denkbar, dass die zweite Zone durch eine weitere Hohlgitterstruktur gebildet ist, welche ähnlich oder gleich der Hohlgitterstruktur 12 ausgebildet sein kann. Ferner ist es denkbar, dass die zweite Zone durch ein Bauelement des Wärmetauschers 10 gebildet sein kann, wobei das Bauelement einstückig mit der Hohlgitterstruktur 12 ausgebildet sein kann, oder das Bauelement und die Hohlgitterstruktur 12 sind separat voneinander ausgebildete und zumindest mechanisch miteinander verbundene Bauelemente. Insbesondere kann das Bauelement eine weitere Hohlgitterstruktur sein, welche gleich oder ähnlich der Hohlgitterstruktur 12 ausgebildet sein kann. Insbesondere ist das Bauelement durch das generative Fertigungsverfahren hergestellt. Das Kondensat wird beispielsweise aus der Kondensatsammelzone 82 abgeführt und dabei durch die zweite Zone hindurchgeführt. Vorzugsweise ist die zweite Zone fluidisch von der ersten Zone getrennt, sodass sich das zweite Fluid nicht mit dem dritten Fluid vermischt. In der zweiten Zone kann das Kondensat durch das dritte Fluid, welches vorzugsweise kälter als das zweite Fluid ist, kalt gehalten oder weiter gekühlt werden, um beispielsweise einen Dampfdruck des Kondensats noch weiter zu verringern. Insbesondere kann durch die zweite Zone ein erneutes Abdampfen des Kondensats verhindert werden und/oder das Kondensat kann für eine Ausschleusung kaltgehalten oder weiter abgekühlt werden, insbesondere in beziehungsweise durch die zweite Zone beziehungsweise in der zweiten Zone durch das dritte Fluid.

Die Hohlgitterstruktur 12 ist beispielsweise eine erste Gitterstruktur des Wärmetauschers 10. Der Wärmetauscher 10 kann dabei wenigstens eine zweite Gitterstruktur aufweisen, welche als Massivgitterstruktur ausgebildet ist. Die Massivgitterstruktur umfasst mehrere, auch als Massivstäbe bezeichnete massive Stäbe und beispielsweise mehrere, auch als Massivknoten bezeichnete massive Knoten. Die Massivstäbe sind dabei an den Massivknoten mechanisch miteinander verbunden, sodass die Massivstäbe über die mehreren Massivknoten mechanisch miteinander verbunden sind. Dabei können die vorigen und folgenden Ausführungen zur Hohlgitterstruktur auch auf die Massivgitterstruktur übertragen werden, insbesondre mit dem Unterschied, dass die Massivgitterstruktur, da ihre Massivstäbe und Massivknoten massiv ausgebildet sind, nicht von einem Fluid durchströmt werden können. Die Massivgitterstruktur kann Teil der Hohlgitterstruktur 12 beziehungsweise in der Hohlgitterstruktur 12 angeordnet sein, oder die Massivgitterstruktur schließt sich an die Hohlgitterstruktur 12 an beziehungsweise ist neben der Hohlgitterstruktur 12 angeordnet, insbesondere in Einbaulage des Wärmetauschers 10 in vertikaler Richtung unterhalb der Hohlgitterstruktur 12. Vorzugsweise sind die Massivstäbe und/oder die Massivknoten aus einem metallischen Werkstoff gebildet. Vorzugsweise sind die Massivgitterstruktur und die Hohlgitterstruktur 12 einstückig miteinander ausgebildet, wobei die Massivgitterstruktur durch das generative Fertigungsverfahren hergestellt sein kann, durch welches auch die Hohlgitterstruktur 12 hergestellt ist beziehungsweise wurde.

Die zuvor genannte Kapillarschicht ist eine Kapillarstruktur, durch welche das Kondensat gezielt von der Hohlgitterstruktur 12 abgeführt und beispielsweise in die Kondensatsammelzone 82 geführt werden kann. Durch das Abführen des Kondensats in der Kapillarstruktur steht weiterhin kalte, insbesondere metallische, Fläche und somit ein vorteilhafter Wärmeübergang zur Verfügung für eine erneute Kondensatbildung. Durch die Verwendung der mehreren Zonen kann eine fraktionierte Kondensation des ersten Fluids bewirkt werden.

FIG 8 veranschaulicht eine siebte Ausführungsform des Wärmetauschers 10. Aus FIG 8 ist beispielsweise ein Ansatzstück 86 erkennbar, durch welches das zweite Fluid in die erste Zone und das dritte Fluid in die zweite Zone eingeleitet werden kann. In Strömungsrichtung des zweiten Fluids und des dritten Fluids schließt sich an das Ansatzstück 86 die Hohlgitterstruktur 12 beispielsweise mit der ersten Zone und der zweiten Zone an. Das Ansatzstück 86 steuert beziehungsweise regelt somit den Zufluss des zweiten Fluids und des dritten Fluids in die unterschiedlichen Zonen, insbesondere der Hohlgitterstruktur 12. Die sich auf die erste Zone und zweite Zone beziehenden Ausführungen können weiter auf eine dritte Zone übertragen werden, in der beispielsweise ein viertes Medium mit einer gegenüber der zweiten Fluidtemperatur weiter geringeren dritten Fluidtemperatur durch den Wärmetauscher 10 strömt. Hierdurch kann auf einfache, bauraum- und kostengünstige Weise eine fraktionierte Auskondensation des ersten Fluids beziehungsweise von jeweiligen Komponenten des ersten Fluids bewirkt werden.

## Patentansprüche

1. Wärmetauscher (10), mit wenigstens einer Hohlgitterstruktur (12), welche mehrere hohle Stäbe (14) aufweist, die an jeweiligen hohlen Knoten (16) der Hohlgitterstruktur (12) mechanisch und fluidisch miteinander verbunden sind, wobei die Hohlgitterstruktur (12) außenseitig von einem ersten Fluid umströmbar und innenseitig von einem zweiten Fluid (18) durchströmbar ist, und wobei wenigstens eines der Fluide infolge eines Wärmeaustausches mit dem jeweils anderen Fluid (18) über die Hohlgitterstruktur (12) temperierbar ist.

2. Wärmetauscher (10) nach Anspruch 1,
wobei die Hohlgitterstruktur (12) einstückig ausgebildet ist.

3. Wärmetauscher (10) nach Anspruch 1 oder 2,
wobei die Hohlgitterstruktur (12) durch ein generatives Fertigungsverfahren, insbesondere durch selektives Laserschmelzen, hergestellt ist.

4. Wärmetauscher (10) nach einem der vorhergehenden Ansprüche,
wobei die hohlen Stäbe (14) einen Innendurchmesser aufweisen, welcher in einem Bereich von einschließlich 0,1 Millimeter bis einschließlich 10 Millimetern, insbesondere in einem Bereich von einschließlich 0,8 Millimetern bis einschließlich 3 Millimetern, liegt.

5. Wärmetauscher (10) nach einem der vorhergehenden Ansprüche,
wobei die Hohlgitterstruktur (12) eine Wanddicke aufweist, welche in einem Bereich von einschließlich 0,1 Millimeter bis einschließlich 1 Millimeter, insbesondere in einem Bereich von einschließlich 0,2 Millimetern bis einschließlich 0,9 Millimetern und vorzugsweise in einem Bereich von einschließlich 0,3 Millimetern bis einschließlich 0,7 Millimetern, liegt.

6. Wärmetauscher (10) nach einem der vorhergehenden Ansprüche,
wobei die Hohlgitterstruktur (12) wenigstens zwei voneinander unterschiedliche, durch die Stäbe (14) und die Knoten (16) gebildete Gittertypen aufweist.

7. Wärmetauscher (10) nach einem der vorhergehenden Ansprüche,
wobei die Hohlgitterstruktur (12) außenseitig mit einer porösen, von dem ersten Fluid durchströmbaren Schicht (30) versehen ist.

8. Wärmetauscher (10) nach einem der vorhergehenden Ansprüche,
wobei die poröse Schicht (30) aus einem metallischen und/oder gesinterten Werkstoff gebildet ist.

9. Wärmetauscher (10) nach einem der vorhergehenden Ansprüche,
wobei ein den Stäben (14) gemeinsamer und von dem zweiten Fluid (18) durchströmbarer Zulaufkanal (38) vorgesehen ist, über welchen die Stäbe (14) mit dem zweiten Fluid (18) versorgbar sind.

10. Wärmetauscher (10) nach Anspruch 9,
wobei der Zulaufkanal (38) stromauf der Stäbe (14) in mehrere, von dem zweiten Fluid (18) durchströmbare Zulaufteilkanäle (42) aufzweigt, über welche die Stäbe (14) mit dem zweiten Fluid (18) versorgbar sind.

11. Wärmetauscher (10) nach einem der vorhergehenden Ansprüche,
wobei die Hohlgitterstruktur (12) zwischen zwei auf einander gegenüberliegenden ersten Seiten (44, 46) der Hohlgitterstruktur (12) angeordneten und von dem zweiten Fluid (18) durchströmbaren ersten Wänden (54, 56) angeordnet ist, wobei die Stäbe (14) über eine der ersten Wände (54, 56) mit dem zweiten Fluid (18) versorgbar sind und wobei das zweite Fluid (18) über die andere der ersten Wände (54, 56) aus den Stäben (14) abführbar ist und/oder wobei die Hohlgitterstruktur (12) zwischen zwei auf einander gegenüberliegenden zweiten Seiten (68, 70) der Hohlgitterstruktur (12) angeordneten und von dem ersten Fluid durchströmbaren zweiten Wänden (64, 66) angeordnet ist, wobei die Hohlgitterstruktur (12) außenseitig über eine der zweiten Wände (64, 66) mit dem ersten Fluid versorgbar ist und wobei das erste Fluid über die andere der zweiten Wände (64, 66) von der Hohlgitterstruktur abführbar ist.

12. Wärmetauscher (10) nach einem der vorhergehenden Ansprüche,
wobei eine Kondensatsammelzone (82) vorgesehen ist, in welcher aus der Temperierung des ersten Fluids resultierendes Kondensat aufzufangen und zu sammeln ist.

13. Wärmetauscher (10) nach Anspruch 12,
wobei die Kondensatsammelzone (82) wenigstens eine von dem Kondensat durchströmbare poröse Schicht (84) aufweist.

14. Verfahren zum Herstellen eines Wärmtauschers (10), wobei bei dem Verfahren wenigstens eine Hohlgitterstruktur (12) hergestellt wird, die mehrere hohle Stäbe (14) aufweist, welche an jeweiligen hohlen Knoten (16) der Hohlgitterstruktur (16) mechanisch und fluidisch miteinander verbunden werden, wobei die Hohlgitterstruktur (12) außenseitig von einem ersten Fluid umströmbar und innenseitig von einem zweiten Fluid (18) durchströmbar ist, und wobei wenigstens eines der Fluide infolge eines Wärmeaustausches mit dem jeweils anderen Fluid (18) über die Hohlgitterstruktur (12) temperierbar ist.

15. Verfahren zum Temperieren wenigstens eines Fluids durch einen Wärmetauscher (10), welcher wenigstens eine Hohlgitterstruktur (12) mit mehreren hohlen Stäben (14) aufweist, wobei die hohlen Stäbe (14) an jeweiligen hohlen Knoten (16) der Hohlgitterstruktur (12) mechanisch und fluidisch miteinander verbunden sind, und wobei die Hohlgitterstruktur (12) außenseitig von einem ersten Fluid umströmt und innenseitig von einem zweiten Fluid (18) durchströmt wird, sodass wenigstens eines der Fluide infolge eines Wärmeaustausches mit dem jeweils anderen Fluid (18) über die Hohlgitterstruktur (12) temperiert wird.
